# EUROPEAN PATENT APPLICATION

(11) **EP 2 110 955 A1**
(43) Date of publication of application: **21.10.2009**
(21) Application number: 08290379.0
(22) Date of filing: 17.04.2008
(51) Int. Cl.: H04B 1/38

(54) **Base station for a mobile communication network**

(71) Applicant: Alcatel Lucent, 75008 Paris (FR)
(72) Inventor: Rouffet, Denis, 92100 Boulogne Bilancourt (FR); Mirelli, Giacomo, 20061 Carugate(Milano) (IT)
(74) Representative: Colombo, Stefano Paolo

(57) **Abstract**

It is disclosed a base station for a mobile communication network, the base station comprising: at least one radio transceiver for exchanging traffic in form of at least one radio signal with one or more mobile terminals located within at least a portion of a cell; and a base band processing module suitable for processing the traffic in form of at least one base band signal corresponding to the at least one radio signal. The base station is **characterized in that** it comprises a central unit including the base band processing module, a remote unit including the at least one radio transceiver, and a wireless connection between the remote unit and the central unit.

## Description

### Field of the invention

The present invention generally relates to the field of mobile communication networks. In particular, the present invention relates to a base station for a mobile communication network. Further, the present invention relates to a method of processing traffic at a base station of a mobile communication network.

### Background art

It is known that a mobile communication network allows to provide a plurality of users with a number of mobile telephone services (e.g. calls, conference calls, etc.) and mobile data exchange services (e.g. SMS, MMS, Internet access, etc.). Exemplary mobile communication networks are the GSM (Global System for Mobile communication) and the UMTS (Universal Mobile Telecommunication System).

A mobile communication network typically comprises a plurality of base stations distributed across a geographical area according to a predefined arrangement, each base station having associated a respective coverage area which is termed "cell".

Each base station is configured for exchanging traffic in the form of radio signals with mobile terminals of users located within its cell. For instance, in a GSM network, such radio signals may have a carrier frequency of about 900 MHz or 1800 MHz.

To this purpose, a cell may comprise either one transceiver or more transceivers. In the first case, the transceiver covers the whole cell, whereas in the second case each radio transceiver covers only a portion (i.e. a sector) of the cell. For instance, a base station may include three transceivers, each one having a directivity discrimination angle of about 120°. If the three transceivers are placed at a same site (e.g., they are fixed to a same pylon) and they are oriented towards directions forming angles of 120°, each transceiver covers a substantially hexagonal sector, the three sectors being substantially non overlapping and having one vertex in common which corresponds to the site position.

Typically, a base station comprises, besides the transceiver(s), a processing module which is configured for processing the traffic exchanged by the transceiver(s) of the base station. Generally, the processing module performs a base-band processing on base band signals associated to the radio signals exchanged by the transceiver(s) of the base station with mobile terminals located within the respective cell(s). The processing module is typically connected to the transceiver(s) of the same base station either by means of a coaxial link or by means of an optical fiber link.

In a mobile communication network, the various base stations are connected to one another according to a tree logical topology, wherein the root of the tree is a traffic collection center. For communicating with the adjacent base stations, each base station typically has an upstream microwave transceiver and one or more downstream microwave transceivers. Such microwave transceivers are suitable for exchanging traffic in the form of microwaves having carrier frequencies e.g. of 13, 18, 23, 38, 50, 60 or 70 GHz.

Herein, the expression "upstream traffic" will designate the traffic which is collected by each base station from mobile terminals located within its cell, and which travels within the mobile telecommunication network from the base station towards the traffic collection center, possibly through other intermediate base stations. On the other hand, the expression "downstream traffic" will designate the traffic which travels from the traffic collection center towards a base station, possibly through other intermediate base stations, and which is distributed by the base station to mobile terminals located within its cell.

### Summary of the invention

However, the known base stations described above exhibit some drawbacks, which are mainly related to the implementation of the link between the transceiver(s) of the base station and its base band processing module either by means of a coaxial link or by means of an optical fiber link.

Indeed, in case the above link is a coaxial link, the maximum length of the link is disadvantageously limited to few tens of meters. This disadvantageously forces to install the base band processing module within a range of few tens of meters from the transceiver(s) of the base station. For instance, if the transceiver(s) are located on top of a pylon, the base band processing module necessarily has to be placed in a cabinet at the foot of the pylon. However, this position may be not easy to access when maintenance, servicing or updating of the base band processing module are required.

On the other hand, implementing the above link by means of an optical fiber advantageously allows to increase the maximum distance between the transceiver(s) and the base band processing module to some kilometers, thus allowing to choose the position of the base band processing module with an increased flexibility. This allows to reduce the operation and maintenance cost (briefly termed "OPEX") of the mobile communication network by positioning the base band processing module at a position which is particularly easy to access. Moreover, the optical fiber link capacity is higher than the waveguide link capacity, thus allowing to increase the overall capacity of the base station. However, the optical fiber link is expensive to install, since it requires very long and complex operations such as digging, thus disadvantageously increasing the cost of installation (briefly termed "CAPEX") of the mobile communication network.

Accordingly, the inventors have been faced with the problem of providing a base station for a mobile communication network, which allows to overcome at least some of the drawbacks of both the above known implementations of the link between transceiver(s) and base band processing module of the base station.

In particular, the inventors have been faced with the problem of providing a base station for a mobile communication network which allows to choose the position of the base band processing module with improved flexibility as compared to the above known implementations, which has capacity higher than a coaxial link, and which is less costly than an optical fiber link.

According to a first aspect, the present invention provides a base station for a mobile communication network, the base station comprising: at least one radio transceiver for exchanging traffic in form of at least one radio signal with a mobile terminal located within at least a portion of a cell; and a base band processing module suitable for processing the traffic in form of at least one base band signal corresponding to the at least one radio signal. The base station is **characterized in that** it comprises a central unit including the base band processing module and a remote unit including the at least one radio transceiver. The remote unit and the central unit are configured to establish a wireless connection between each other.

Preferably, the remote unit further comprises a remote processing module and a remote antenna, the remote processing module being connected both to the at least one radio transceiver and to the remote antenna.

Further, preferably, the central unit further comprises a central processing module and a central antenna, the central processing module being connected both to the base band processing module and to the central antenna, the central antenna being configured for exchanging microwave signals with the remote antenna, thus implementing the wireless connection.

Preferably, the microwave signals have a carrier frequency higher than 60 GHz.

According to preferred embodiments, the remote processing module comprises:
- a remote multiplexer-demultiplexer having an upstream side input, an upstream side output, **N** downstream side inputs and **N** downstream side outputs, the upstream side input and the upstream side output being connected to the remote antenna;
- **N** first cascades of a receiver, a filter and an analog-to-digital converter, each of the **N** first cascades being connected to a respective downstream side input of the **N** downstream side inputs; and
- **N** second cascades of a digital-to-analog converter, a further filter and a power amplifier, each of the **N** second cascades being connected to a respective downstream side output of the **N** downstream side outputs.

According to more preferred embodiments, the central processing module (CM) comprises:
- a central multiplexer-demultiplexer having a downstream side input, a downstream side output, **N** upstream side inputs and **N** upstream side outputs, the downstream side input and the downstream side output being connected to the central antenna;
- **N** modulators, each of the **N** modulators being connected to a respective upstream side input of the **N** upstream side inputs; and
- **N** third cascades of a channel rebuilder and a demodulator, each of the **N** third cascades being connected to a respective upstream side output of the **N** upstream side outputs.

Preferably, the base station further comprises an upstream microwave transceiver suitable for connecting the base station to a further adjacent upstream base station or to a traffic collection center of the mobile telecommunication network, the upstream microwave transceiver being located at the central unit.

Preferably, the base station further comprises a downstream microwave transceiver suitable for connecting the base station to a still further adjacent downstream base station, the downstream microwave transceiver being located at the central unit (Cu).

Preferably, the base station comprises a further remote unit including at least one further radio transceiver for exchanging traffic in form of at least one further radio signal with a further mobile terminal located within at least a further portion of the cell. According to first variants, the further remote unit is configured to establish a further wireless connection with the central unit. According to second variants, the further remote unit is configured to establish a further wireless connection with the remote unit.

According to a second aspect, the present invention provides a method of processing traffic at a base station of a mobile communication network, the method comprising:
- at a remote unit of the base station, receiving an upstream radio signal by means of a radio transceiver from a mobile terminal located within at least a portion of a cell;
- at the remote unit, processing the upstream radio signal thus generating an upstream digital signal corresponding to the upstream radio signal;
- transmitting the upstream digital signal to a central unit of the base station by means of a wireless connection between the remote unit and the central unit;
- at the central unit, processing the upstream digital signal thus generating an upstream base band signal corresponding to the upstream radio signal; and
- at the central unit, performing a base band processing of the upstream base band signal by means of a base band processing module of the base station.

Preferably, the step of transmitting comprises transmitting the upstream digital signal by means of the wireless connection in form of a microwave signal having a carrier frequency higher than 60 GHz.

### Brief description of the drawings

The present invention will become clearer by reading the following detailed description, given by way of example and not of limitation, to be read with reference to the accompanying drawings wherein:
- Figure 1 schematically shows a base station according to a first embodiment of the present invention;
- Figures 2a and 2b show in further detail the structure of the remote module and central module of the base station of Figure 1, respectively;
- Figure 3 schematically shows a base station according to a second embodiment of the present invention;
- Figure 4 schematically shows a base station according to a third embodiment of the present invention; and
- Figure 5 schematically shows a base station according to a fourth embodiment of the present invention.

### Detailed description of preferred embodiments of the invention

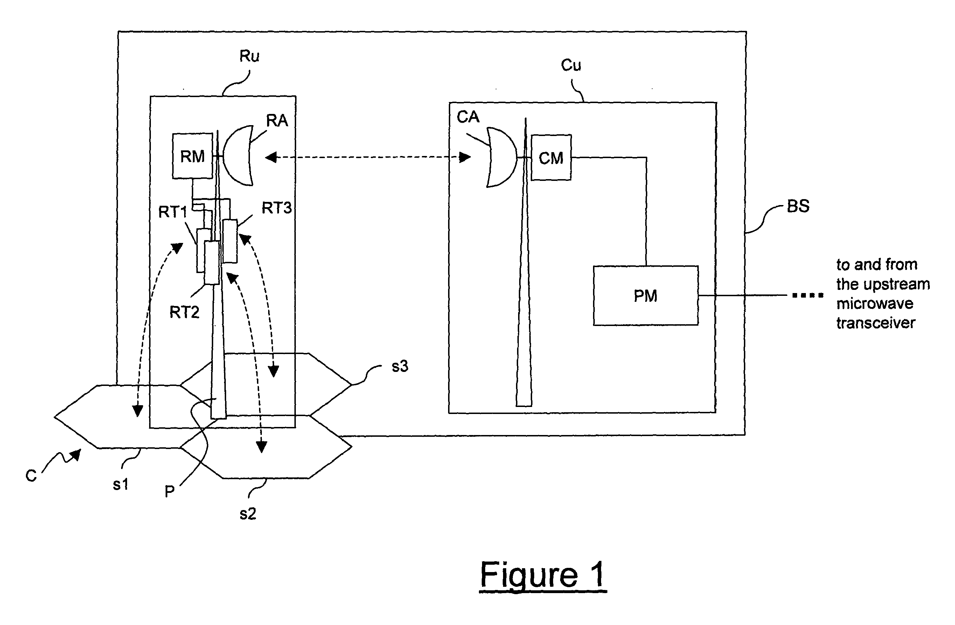

Figure 1 schematically shows a base station BS according to a first embodiment of the present invention. The base station BS is configured for covering a cell C, which is also schematically shown in Figure 1.

Preferably, the base station BS comprises a central unit Cu and a remote unit Ru.

Preferably, the remote unit Ru comprises at least one transceiver suitable for covering at least one portion of the cell C. In particular, by way of example and not of limitation, it is assumed that the remote unit Ru comprises three transceivers RT1, RT2, RT3, each one being suitable for covering a respective sector s1, s2 and s3 of the cell C. It is also assumed that each transceiver RT1, RT2, RT3 has a directivity discrimination angle of about 120°, that the three transceivers RT1, RT2, RT3 are placed at a same site (e.g., they are fixed on top of a same pylon P, as shown in Figure 1) and that they are oriented towards directions forming angles of 120°. In this way, each transceiver RT1, RT2, RT3 covers a respective substantially hexagonal sector s1, s2, s3, the three sectors s1, s2, s3 being substantially non overlapping and having one vertex in common which corresponds to the position of the pylon P.

The installation of the transceivers RT1, RT2, RT3 on top of the pylon P is merely exemplary. Indeed, the transceivers RT1, RT2, RT3 may be located on the roof or a wall of a building, a tower, etc.

Further, preferably, the central unit Cu of the base station BS comprises a base band processing module PM, which can be of the known type mentioned above.

The base station BS further comprises an upstream microwave transceiver (not shown in Figure 1) suitable for connecting the base station BS to a further adjacent upstream base station or directly to the traffic collection center. Further, preferably, the base station BS (if it is not a leaf of the tree logical topology according to which the base stations of a mobile communication network are usually arranged) may comprise one or more downstream microwave transceivers (not shown in Figure 1) suitable for connecting the base station BS to one or more further adjacent downstream base stations. Preferably, the upstream microwave transceiver and the possible one or more downstream microwave transceivers are located at the same site as the central unit Cu.

According to the present invention, preferably, the link between the transceivers RT1, RT2, RT3 of the remote unit Ru and the base band processing module PM of the central unit Cu is a point-to-point wireless link.

In particular, the remote unit Ru preferably comprises a remote processing module RM and a remote antenna RA. The remote processing module RM is preferably connected both to the transceivers RT1, RT2, RT3 and to the remote antenna RA by means either of an optical fiber connection or an electric connection such as for instance a CAT5 connection.

Further, preferably, the central unit Cu comprises a central processing module CM and a central antenna CA. Preferably, the central processing module CM is connected to the base band processing module PM and to the central antenna CA, by means either of an optical fiber connection or an electric connection such as for instance a CAT5 connection. The central antenna CA is preferably configured to exchange microwave signals with the remote antenna RA, thus connecting the central unit Cu to the remote unit Ru by means of a wireless link.

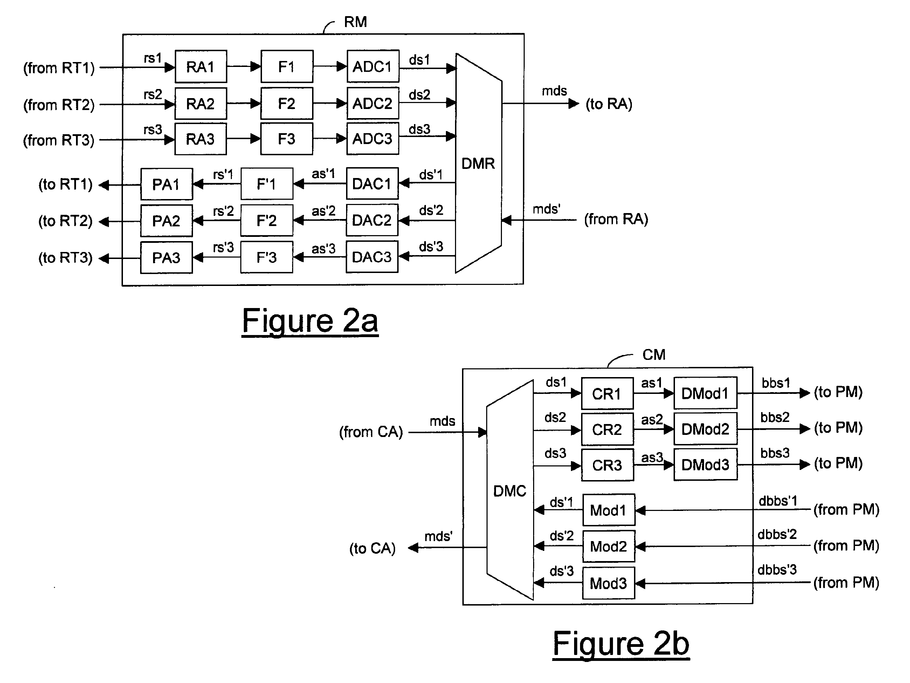

Figure 2a shows in further detail the structure of the remote processing module RM comprised within the remote unit Ru.

The remote processing module RM preferably comprises a remote multiplexer-demultiplexer DMR having an upstream side input, an upstream side output, N downstream side inputs and N downstream side outputs, N being the number of transceivers comprised in the remote unit Ru. When the remote unit Ru comprises only one transceiver, N is equal to 1, and therefore the remote multiplexer-demultiplexer DMR can be omitted. In the embodiment of Figure 1, N is equal to 3.

Both the upstream side input and the upstream side output of the remote multiplexer-demultiplexer DMR are connected to the remote antenna RA. Each of the downstream side inputs of the remote multiplexer-demultiplexer DMR is connected to a respective cascade of a receiver (indicated as RA1, RA2 and RA3, respectively, in Figure 2a), a filter (indicated as F1, F2 and F3, respectively, in Figure 2a), and an analog-to-digital converter (indicated as ADC1, ADC2 and ADC3, respectively, in Figure 2a). Further, each of the downstream side outputs of the remote multiplexer-demultiplexer DMR is connected to a respective cascade of a digital-to-analog converter (indicated as DAC1, DAC2 and DAC3, respectively, in Figure 2a), a further filter (indicated as F'1, F'2 and F'3, respectively, in Figure 2a), and a power amplifier (indicated as PA1, PA2 and PA3, respectively, in Figure 2a).

Figure 2b shows in further detail the structure of the central processing module CM comprised in the central unit Cu.

The central processing module CM preferably comprises a central multiplexer-demultiplexer DMC having a downstream side input, a downstream side output, N upstream side inputs and N upstream side outputs. When the remote unit Ru comprises only one transceiver, N is equal to 1, and therefore also the central multiplexer-demultiplexer DMC can be omitted. In the embodiment of Figure 1, N is equal to 3.

Both the downstream side input and the downstream side output of the central multiplexer-demultiplexer DMC are connected to the central antenna CA. Each of the upstream side inputs of the central multiplexer-demultiplexer DMC is connected to a respective modulator (indicated as Mod1, Mod2 and Mod3, respectively, in Figure 2b). Further, each of the upstream side outputs of the central multiplexer-demultiplexer DMC is connected to a respective cascade of a channel rebuilder (indicated as CR1, CR2 and CR3, respectively, in Figure 2b) and a demodulator (indicated as DMod1, DMod2 and DMod3, respectively, in Figure 2b).

Herein, by referring to Figures 1, 2a and 2b, the operation of the base station BS will be described in further detail.

By firstly considering the upstream traffic, each transceiver RT1, RT2, RT3 collects traffic from mobile terminals located within its respective sector s1, s2, s3 of the cell C in the form of a respective upstream radio signal rs1, rs2, rs3. Preferably, each upstream radio signal rs1, rs2, rs3 comprises a plurality of upstream radio channels (e.g. 12) having a bandwidth (e.g. 5 MHz) and having respective carrier frequencies centered at about e.g. 900 MHz or 1800 MHz.

Then, each transceiver RT1, RT2, RT3 forwards the respective upstream radio signal rs1, rs2, rs3 to the remote processing module RM, in particular to a respective receiver RA1, RA2, RA3 of the module RM. Each receiver RA1, RA2, RA3 forwards the respective upstream radio signal rs1, rs2, rs3 to the filter F1, F2, F3, which preferably filters it and performs upon it a frequency conversion and a power adjustment for limiting the upstream radio signals dynamic range.

Then, each upstream radio signal rs1, rs2, rs3 is forwarded to a respective analog-to-digital converter ADC1, ADC2, ADC3, which converts it in a corresponding upstream digital signal ds1, ds2, ds3. The analog-to-digital converters ADC1, ADC2, ADC3 are suitable for adjusting the number of bits per sample. For instance, the number of bits per sample may be adjusted to 8 bit per sample.

Then, the upstream digital signals ds1, ds2, ds3 are forwarded to the remote multiplexer-demultiplexer DMR, which multiplexes them by means of a time division multiplexing technique, thus generating a single upstream multiplexed digital signal mds.

Then, the upstream multiplexed digital signal mds is forwarded to the remote antenna RA, which preferably transmits it to the central antenna CA in the form of an upstream microwave signal, by means of the upstream wireless link between the remote antenna RA and the central antenna CA. Preferably, the upstream wireless link between the remote antenna RA and the central antenna CA is implemented as a CPRI (Common Public Radio Interface), with a carrier frequency which is preferably higher than 50 GHz, more preferably higher than 60 GHz, even more preferably higher than 70 GHz.

When the central antenna CA receives the upstream multiplexed digital signal mds in the form of an upstream microwave signal from the remote antenna RA, it preferably forwards it to the central processing module CM, which receives it by means of its central multiplexer-demultiplexer DMC, thus demultiplexing it and recovering the upstream digital signals ds1, ds2 and ds3.

Each upstream digital signal ds1, ds2, ds3 is then forwarded to a respective channel rebuilder CR1, CR2, CR3 which preferably performs a digital-to-analog conversion, thus generating a corresponding upstream analog signal as1, as2, as3.

Then, each upstream analog signal as1, as2, as3 is forwarded to the respective demodulator DMod1, DMod2, DMod3, which demodulates it, thus generating corresponding upstream base band signals bbs1, bbs2, bbs3.

The upstream base band signals bbs1, bbs2 and bbs3, which correspond to the upstream radio signals rs1, rs2 and rs3 collected by the transceivers RT1, RT2 and RT3, respectively, are finally sent to the base band processing module PM, which performs upon them a known base band processing. Finally, the base band processing module PM forwards the upstream base band signals bbs1, bbs2 and bbs3 to the upstream microwave transceiver (not shown in Figure 1), which in turn forwards them towards the traffic collection center, possibly through other intermediate base stations.

By considering now the downstream traffic, the base station BS receives from the traffic collection center (possibly through other intermediate base stations) downstream traffic to be distributed to the mobile terminals located within the cell C. Such a traffic is received by the upstream microwave transceiver (not shown in Figure 1), which preferably forwards it to the base band processing module PM. After processing, the base band processing module PM generates, according to this example, three downstream digital base band signals dbbs'1, dbbs'2, dbbs'3, each representing traffic to be transmitted to mobile terminals located in a respective sector s1, s2 and s3 of the cell C.

Preferably, each downstream digital base band signal dbbs'1, dbbs'2, dbbs'3 is forwarded to the central processing module CM, in particular to a respective modulator Mod1, Mod2, Mod3 of the central processing module CM. Each modulator Mod1, Mod2, Mod3 uses the received downstream digital base band signal dbbs'1, dbbs'2, dbbs'3 for modulating a radio frequency carrier, thus obtaining a corresponding downstream digital signal ds'1, ds'2, ds'3.

The downstream digital signals ds'1, ds'2, ds'3 are then forwarded to the central multiplexer-demultiplexer DMC, which multiplexes them by means of a time division multiplexing technique, thus obtaining a downstream multiplexed digital signal mds'.

Then, the downstream multiplexed digital signal mds' is forwarded to the central antenna CA, which preferably transmits it to the remote antenna RA in the form of a downstream microwave signal, by means of the downstream wireless link between the remote antenna RA and the central antenna CA. Preferably, also the downstream wireless link between the remote antenna RA and the central antenna CA is implemented as a CPRI, with a carrier frequency which is preferably higher than 50 GHz, more preferably higher than 60 GHz, even more preferably higher than 70 GHz.

When the remote antenna RA receives the downstream multiplexed digital signal mds' in the form of a downstream microwave signal from the central antenna CA, it preferably forwards it to the remote processing module RM, which receives it by means of its remote multiplexer-demultiplexer DMR, thus demultiplexing it and recovering the downstream digital signals ds'1, ds'2 and ds'3.

Preferably, each downstream digital signal ds'1, ds'2, ds'3 is transmitted to a respective digital-to-analog converter DAC1, DAC2, DAC3, which converts it in a corresponding downstream analog signal as'1, as'2, as'3.

Then, each downstream analog signal as'1, as'2, as'3 is forwarded to a respective further filter F'1, F'2, F'3, which filters it and performs a frequency conversion to a radio frequency having a carrier of about 900 MHz or 1800 MHz, thus generating a corresponding downstream radio signal rs'1, rs'2, rs'3.

Then, each downstream radio signal rs'1, rs'2, rs'3 is preferably forwarded to a respective amplifier PA1, PA2, PA3, which is suitable for adjusting its own gain in order to limit the dynamic range of the downstream radio signal rs'1, rs'2, rs'3.

Then, each downstream radio signal rs'1, rs'2, rs'3 is preferably forwarded to a respective transceiver RT1, RT2, RT3, which in turn forwards it to the mobile terminals located within its respective sector s1, s2, s3 of the cell C.

Therefore, advantageously, the base station BS shown in Figure 1 allows to choose the position of the base band processing module PM with a very high flexibility.

Indeed, after the remote unit Ru has been installed in such a way to cover the cell C, the central unit Cu comprising the base band processing module PM may advantageously be located at any position within a range whose radius is the maximum length of the microwave wireless link between the remote antenna RA and the central antenna CA, e.g. some kilometers. Therefore, the central unit Cu may be located at a position which can be easily accessed when maintenance, servicing or updating of the central unit are required.

At the same time, the base station BS of Figure 1 advantageously exhibits a very high capacity between the transceivers RT1, RT2, RT3 and the base band processing module PM. Indeed, the capacity of the microwave wireless link between the remote antenna RA and the central antenna CA may be considerably higher than the capacity of a coaxial link. For instance, by using the above mentioned CPRI interface for implementing the wireless link, a capacity of some hundreds of Mbits/s can be obtained.

On the other hand, the cost of the wireless link between the remote unit Ru and the central unit Cu is much lower than the cost of an optical fiber link, since it can be installed in an easier way than the optical fiber link, as it does not require any complex operation such as digging. Accordingly, the overall cost of the network (i.e. CAPEX and OPEX) is advantageously reduced.

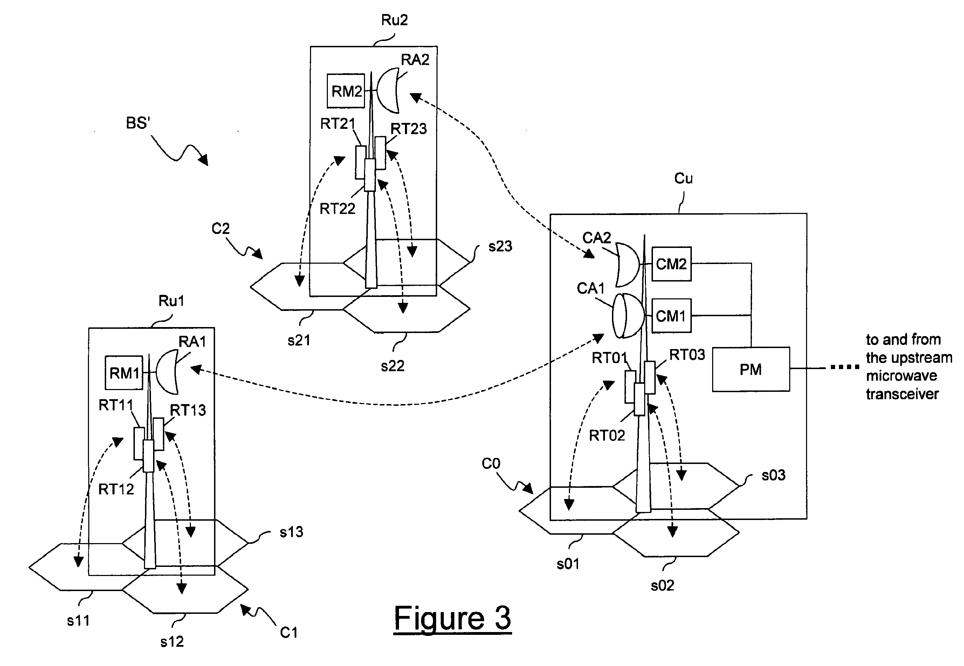

Figure 3 shows a base station BS' according to a second embodiment of the present invention.

The base station BS' comprises a central unit Cu, a first remote unit Ru1 and a second remote unit Ru2.

Preferably, the first remote unit Ru1 comprises at least one first transceiver suitable for covering at least one portion of a first cell C1. In particular, by way of example and not of limitation, it is assumed that the first remote unit Ru1 comprises three first transceivers RT11, RT12 and RT13, each one being suitable for covering a respective sector s11, s12, s13 of the first cell C1. Always by way of example, it is assumed that the first transceivers RT11, RT12 and RT13 are arranged as disclosed above by referring to the remote unit Ru of Figure 1.

Further, preferably, also the second remote unit Ru2 comprises at least one second transceiver suitable for covering at least one portion of a second cell C2. In particular, by way of example and not of limitation, it is assumed that also the second remote unit Ru2 comprises three second transceivers RT21, RT22 and RT23, each one being suitable for covering a respective sector s21, s22, s23 of the second cell C2. Always by way of example, it is assumed that also the second transceivers RT21, RT22 and RT23 are arranged as disclosed above by referring to the remote unit Ru of Figure 1.

Further, preferably, the central unit Cu of the base station BS' comprises a base band processing module PM, which can be of the known type mentioned above. Further, preferably, the central unit Cu comprises at least one third transceiver suitable for covering at least one portion of a third cell C0. In particular, by way of example and not of limitation, it is assumed that also the central unit Cu comprises three third transceivers RT01, RT02 and RT03, each one being suitable for covering a respective sector s01, s02, s03 of the third cell C2. Always by way of example, it is assumed that also the third transceivers RT01, RT02 and RT03 are arranged as disclosed above by referring to the remote unit Ru of Figure 1.

The base station BS' further comprises an upstream microwave transceiver (not shown in Figure 3) suitable for connecting the base station BS' to a further adjacent upstream base station or directly to the traffic collection center. Further, preferably, the base station BS' (if it is not a leaf of the tree logical topology according to which the base stations of a mobile communication network are usually arranged) may comprise one or more downstream microwave transceivers (not shown in Figure 3) suitable for connecting the base station BS' to one or more further adjacent downstream base stations. Preferably, the upstream microwave transceiver and the possible one or more downstream microwave transceivers are located at the same site as the central unit Cu.

According to the present invention, preferably, both the link between the first transceivers RT11, RT12, RT13 of the first remote unit Ru1 and the base band processing module PM of the central unit Cu and the link between the second transceivers RT21, RT22, RT23 of the second remote unit Ru2 and the base band processing module PM of the central unit Cu are wireless links.

In particular, the first remote unit Ru1 preferably comprises a first remote processing module RM1 and a first remote antenna RA1. The first remote processing module RM1 is preferably connected both to the first transceivers RT11, RT12, RT13 and to the first remote antenna RA1 (such connections are not shown in Figure 3) by means either of an optical fiber connection or an electric connection such as for instance a CAT5 connection.

Further, the second remote unit Ru2 preferably comprises a second remote processing module RM2 and a second remote antenna RA2. The second remote processing module RM2 is preferably connected both to the second transceivers RT21, RT22, RT23 and to the second remote antenna RA2 (such connections are not shown in Figure 3) by means either of an optical fiber connection or an electric connection such as for instance a CAT5 connection.

Further, preferably, the central unit Cu comprises a first central processing module CM1, a second central processing module CM2, a first central antenna CA1 and a second central antenna CA2. Preferably, the first central processing module CM1 is connected to the base band processing module PM and to the first central antenna CA1, and the second central processing module CM2 is connected to the base band processing module PM and to the second central antenna CA2, by means either of an optical fiber connection or an electric connection such as for instance a CAT5 connection. The first central antenna CA1 is preferably configured to exchange microwave signals with the first remote antenna RA1, thus connecting the central unit Cu to the first remote unit Ru1 by means of a wireless link. Similarly, the second central antenna CA2 is preferably configured to exchange microwave signals with the second remote antenna RA2, thus connecting the central unit Cu to the second remote unit Ru2 by means of a wireless link.

The structure of the first and second remote processing modules RM1, RM2 is preferably similar to that shown in Figure 2a, so that a detailed description will not be repeated. Similarly, the structure of the first and second central processing modules CM1, CM2 is preferably similar to that shown in Figure 2b, so that a detailed description will not be repeated.

Herein, the operation of the base station BS' will be briefly described.

By firstly considering the upstream traffic, each of the first transceivers RT11, RT12 and RT13 of the first remote unit Ru1 preferably collects the upstream traffic from mobile terminals located within its sector s11, s12, s13 of the first cell C1 in the form of respective first upstream radio signals. The first upstream radio signals are then received by the first remote processing module RM1 which (as described in detail above) converts them in a first upstream multiplexed digital signal. The first upstream multiplexed digital signal is then point to point transmitted in the form of a first upstream microwave signal from the first remote antenna RA1 to the first central antenna CA1, which forwards it to the first central processing module CM1. The first central processing module CM1 preferably (as described in detail above) converts the first upstream multiplexed digital signal in first upstream digital base band signals, each corresponding to a respective first upstream radio signal. The first upstream digital base band signals are then forwarded to the base band processing module PM, which processes them in a known way.

Similarly, each of the second transceivers RT21, RT22 and RT23 of the second remote unit Ru2 preferably collects the upstream traffic from mobile terminals located within its sector s21, s22, s23 of the second cell C2 in the form of respective second upstream radio signals. The second upstream radio signals are then received by the second remote processing module RM2 which (as described in detail above) converts them in a second upstream multiplexed digital signal. The second upstream multiplexed digital signal is then point to point transmitted in the form of a second upstream microwave signal from the second remote antenna RA2 to the second central antenna CA2, which forwards it to the second central processing module CM2. The second central processing module CM2 preferably (as described in detail above) converts the second upstream multiplexed digital signal in second upstream digital base band signals, each corresponding to a respective second upstream radio signal. The second upstream digital base band signals are then forwarded to the base band processing module PM, which processes them in a known way.

Besides, at the same time, each of the third transceivers RT01, RT02 and RT03 of the central unit Cu preferably collects the upstream traffic from mobile terminals located within its sector s01, s02, s03 of the third cell C3 in the form of respective third upstream radio signals. The third upstream radio signals are then converted in corresponding third upstream digital base band signals. The third upstream digital base band signals are then forwarded to the base band processing module PM, which processes them in a known way.

By considering now the downstream traffic, the base station BS' preferably receives traffic to be distributed to mobile terminals located within the first, second and third cell C1, C2 and C0 in the form of first, second and third downstream digital base band signals, respectively. The base band processing module PM processes them in a known way. Then, the first downstream digital base band signals are forwarded to the first central processing module CM1, while the second downstream digital base band signals are forwarded to the second central processing module CM2, and the third downstream digital base band signals are forwarded to the third transceivers RT01, RT02 and RT03, respectively.

The first central processing module CM1 preferably converts (as described in detail above) the first downstream digital base band signals in a first downstream multiplexed digital signal. The first downstream multiplexed digital signal is then point to point transmitted in the form of a first downstream microwave signal from the first central antenna CA1 to the first remote antenna RA1, which forwards it to the first remote processing module RM1. The first remote processing module RM1 preferably (as described in detail above) converts the first downstream multiplexed digital signal in first downstream radio signals, each corresponding to a respective first downstream digital base band signal. Each first downstream radio signal will be then transmitted by one of the first transceivers RT11, RT12 and RT13 to mobile terminals located within a respective sector s11, s12, s12 of the first cell C1.

Similarly, the second central processing module CM2 preferably converts (as described in detail above) the second downstream digital base band signals in a second downstream multiplexed digital signal. The second downstream multiplexed digital signal is then point to point transmitted in the form of a second downstream microwave signal from the second central antenna CA2 to the second remote antenna RA2, which forwards it to the second remote processing module RM2. The second remote processing module RM2 preferably (as described in detail above) converts the second downstream multiplexed digital signal in second downstream radio signals, each corresponding to a respective second downstream digital base band signal. Each second downstream radio signal will be then transmitted by one of the second transceivers RT21, RT22 and RT23 to mobile terminals located within a respective sector s21, s22, s22 of the second cell C2.

Further, each third downstream digital base band signal is received by a respective third transceiver RT01, RT02, RT03, which converts it in a corresponding third downstream radio signal and transmits it to mobile terminals located within its sector s01, s02, s02 of the third cell C0.

Therefore, advantageously, the same base band processing module PM is used for performing base band processing of traffic exchanged with mobile terminals by different remote units and, possibly, by the central unit itself. In other words, the base band processing of traffic associated to different cells is concentrated at a same site, i.e. at the central unit.

Although according the second embodiment shown in Figure 3 the central unit includes a single base band processing unit PM which is responsible of performing the base band processing of all the traffic associated to different cells, according to other embodiments not shown in the drawings the central unit Cu may include a separate base band processing unit for processing the traffic associated to each cell.

In any case, independently of the fact that the base band processing of traffic associated to different cells is implemented by a single base band processing module or by multiple base band processing modules, the concentration of the base band processing at a single site (i.e. the central unit Cu) advantageously allows to reduce the OPEX of the mobile communication network. Indeed, operation and maintenance of apparatuses supporting traffic associated to different cells may be performed at the same site, and therefore substantially at the same time, since the operator does not have to move from one site to another. Such operations are then particularly brief.

Further, concentrating the base band processing of traffic associated to different cells in a same base band processing module advantageously allows to reduce the power consumption at the central unit.

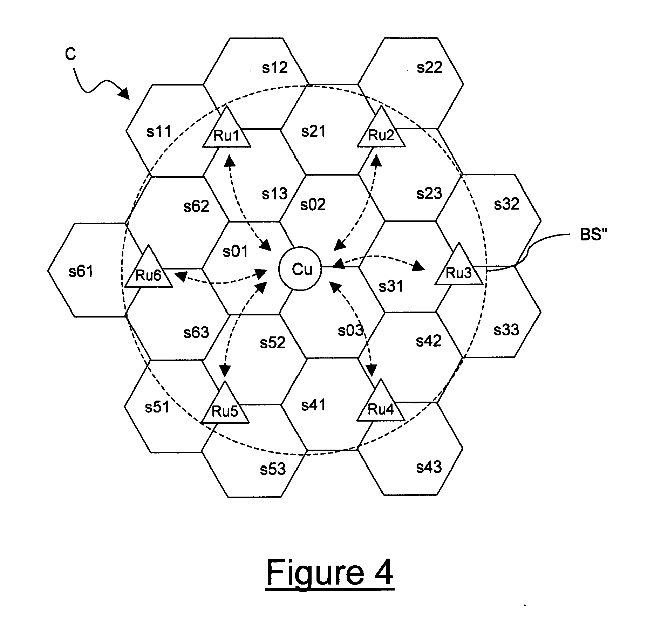

Figure 4 schematically shows a base station BS" according to a third embodiment of the present invention.

The base station BS" preferably comprises a central unit Cu and a number of remote units (six remote units in this specific example) Ru1, ... Ru6 which are all connected to the central unit Cu by means of respective wireless links, similarly to the wireless links shown in Figures 1 and 3. Preferably, the remote units Ru1, ..., Ru6 are arranged substantially at the vertexes of a regular hexagon, whose barycenter is the central unit Cu.

It is assumed that each remote unit Ru1, .., Ru6 has a structure substantially similar to the structure of the remote unit Ru shown in Figure 1. Accordingly, considering for instance the remote unit Ru1, this unit is configured for covering a cell having three non overlapping hexagonal sectors s11, s12 and s13 with a common vertex which corresponds to the position of the remote unit Ru1. The same considerations also apply to the other remote units Ru2, ..., Ru6.

Further, it is assumed that also the central unit Cu is suitable for covering a respective cell having three non overlapping hexagonal sectors s01, s02 and s03 with a common vertex which corresponds to the position of the central unit Cu.

The central unit Cu may comprise either a single base band processing unit for processing traffic exchanged by all the remote units Ru1, ..., Ru6 and the central unit Cu, or it may comprise a separate base band processing unit for each of the remote units Ru1, ..., Ru6 and the central unit Cu.

Therefore, also according to the third embodiment of the present invention, the base band processing of the traffic associated to all the cells covered by the base station BS" is concentrated at a same site, i.e. the central unit Cu. In other words, the traffic within the cell is exchanged in the form of non-base band processed radio signals.

This advantageously allows to transport both upstream and downstream traffic independently of the standard according to which such traffic is formatted.

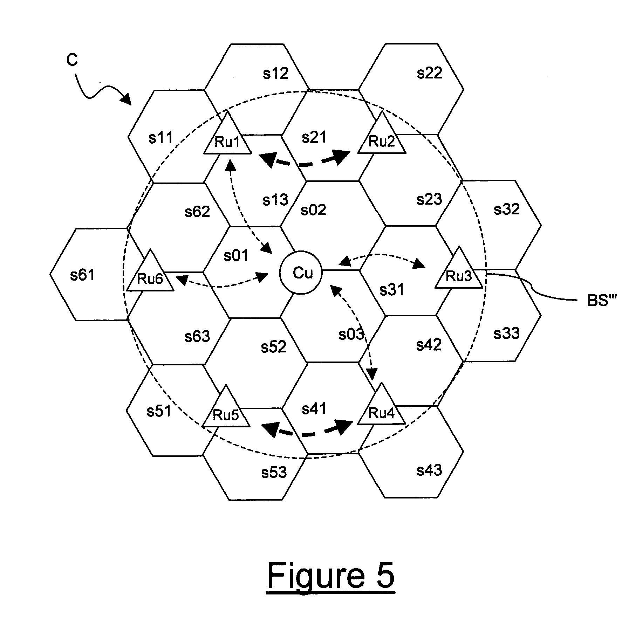

Figure 5 schematically shows a base station BS"' according to a fourth embodiment of the present invention.

The base station BS"' preferably comprises a central unit Cu and a number of remote units (six remote units in this specific example) Ru1, ... Ru6. Preferably, the remote units Ru1, ..., Ru6 are arranged substantially at the vertexes of a regular hexagon, whose barycenter is the central unit Cu.

Further, it is assumed that each remote unit Ru1, .., Ru6 has a structure substantially similar to the structure of the remote unit Ru shown in Figure 1. Accordingly, considering for instance the remote unit Ru1, this unit is configured for covering a cell having three non overlapping hexagonal sectors s11, s12 and s13 with a common vertex which corresponds to the position of the remote unit Ru1. The same considerations also apply to the other remote units Ru2, ..., Ru6.

Further, it is assumed that also the central unit Cu is suitable for covering a respective cell having three non overlapping hexagonal sectors s01, s02 and s03 with a common vertex which corresponds to the position of the central unit Cu.

The central unit Cu may comprise either a single base band processing unit for processing traffic exchanged by all the remote units Ru1, ..., Ru6 and the central unit Cu, or it may comprise a separate base band processing unit for each of the remote units Ru1, ..., Ru6 and the central unit Cu.

Differently from the base station BS" shown in Figure 4, in which the remote units Ru1, .., Ru6 are all connected to the central unit Cu by means of respective wireless links, in the base station according to this fourth embodiment, one or more remote units are preferably connected to the central unit Cu by means of another remote unit of the same base station. In particular, as shown in Figure 5, while the remote units Ru1, Ru3, Ru4 and Ru6 are directly connected to the central unit Cu by means of respective wireless links, the remote unit Ru2 is connected to the central unit Cu by means of the remote unit Ru1, and the remote unit Ru5 is connected to the central unit Cu by means of the remote unit Ru4.

Therefore, by considering e.g. the remote unit Ru2, its structure is still similar to the structure of the remote units described above, i.e. it includes a remote processing module and a remote antenna. As to the remote unit Ru1, besides its remote unit and remote antenna for communicating with the central unit Cu, it preferably comprises a transceiving antenna suitable for exchanging traffic in the form of a microwave signal with the remote antenna of the remote unit Ru2.

Therefore, upstream traffic is collected by the remote unit Ru2 which transmits it in form of an upstream microwave signal to the remote unit Ru1, which in turn forwards it to the central unit Cu. On the other hand, downstream traffic is transmitted from the central unit Cu in form of a downstream microwave signal to the remote unit Ru1, which in turn forwards it to the remote unit Ru2.

It has to be noticed that also according to this fourth embodiment, the base band processing of the upstream and downstream traffic exchanged by the remote unit Ru2 is performed exclusively at the central unit Cu. In other words, similarly to the traffic exchanged between the central unit and a remote unit of a same base station, also the traffic exchanged between different remote units of the same base station is in the form of non-base band processed radio signals. Therefore, also according to this fourth embodiment, both upstream and downstream traffic may be transported within a cell independently of the standard according to which such traffic is formatted.

Although in Figure 5 the remote unit Ru2 is connected to the central unit Cu by means of a single intermediate remote unit (i.e. Ru1), this is not limiting. Indeed, according to other embodiments of the present invention not shown in the drawings, a base station may comprise for instance a central unit and a cascade of a number of remote units connected, the first remote unit of the cascade being responsible of establishing a wireless connection with the central unit through which it exchanges a microwave signal transporting traffic associated to all the remote units.

## Claims

1. Base station (BS; BS'; BS"; BS''') for a mobile communication network, said base station (BS) comprising:
- at least one radio transceiver (RT1, RT2, RT3; RT11, RT12, RT13) for exchanging traffic in form of at least one radio signal (rs1, rs2, rs3) with a mobile terminal located within at least a portion (s1, s2, s3; s11, s12, s13) of a cell (C); and
- a base band processing module (PM) suitable for processing said traffic in form of at least one base band signal (bbs1, bbs2, bbs3) corresponding to said at least one radio signal (rs1, rs2, rs3),
said base station (BS) being **characterized in that** it comprises a central unit (Cu) including said base band processing module (PM), a remote unit (Ru; Ru1) including said at least one radio transceiver (RT1, RT2, RT3; RT11, RT12, RT13), wherein said remote unit (Ru; Ru1) and said central unit (Cu) are configured to establish a wireless connection between each other.

2. The base station (BS; BS'; BS"; BS''') according to claim 1, wherein said remote unit (Ru; Ru1) further comprises a remote processing module (RM; RM1) and a remote antenna (RA; RA1), said remote processing module (RM; RM1) being connected both to said at least one radio transceiver (RT1, RT2, RT3; RT11, RT12, RT13) and to said remote antenna (RA; RA1).

3. The base station (BS; BS'; BS"; BS"') according to claim 2, wherein said central unit (Cu) further comprises a central processing module (CM; CM1) and a central antenna (CA; CA1), said central processing module (CM; CM1) being connected both to said base band processing module (PM) and to said central antenna (CA; CA1), said central antenna (CA; CA1) being configured for exchanging microwave signals with said remote antenna (RA; RA1), thus implementing said wireless connection.

4. The base station (BS; BS'; BS"; BS''') according to claim 3, wherein said microwave signals have a carrier frequency higher than 60 GHz.

5. The base station (BS) according to any of claims 2 to 4, wherein said remote processing module (RM) comprises:
- a remote multiplexer-demultiplexer (DMR) having an upstream side input, an upstream side output, N downstream side inputs and N downstream side outputs, said upstream side input and said upstream side output being connected to said remote antenna (RA);
- N first cascades of a receiver (RA1, RA2, RA3), a filter (F1, F2, F3) and an analog-to-digital converter (ADC1, ADC2, ADC3), each of said N first cascades being connected to a respective downstream side input of said N downstream side inputs; and
- N second cascades of a digital-to-analog converter (DAC1, DAC2, DAC3), a further filter (F'1, F'2, F'3) and a power amplifier (PA1, PA2, PA3), each of said N second cascades being connected to a respective downstream side output of said N downstream side outputs.

6. The base station (BS) according to any of claims 3 to 5, wherein said central processing module (CM) comprises:
- a central multiplexer-demultiplexer (DMC) having a downstream side input, a downstream side output, N upstream side inputs and N upstream side outputs, said downstream side input and said downstream side output being connected to said central antenna (CA);
- N modulators (Mod1, Mod2, Mod3), each of said N modulators being connected to a respective upstream side input of said N upstream side inputs; and
- N third cascades of a channel rebuilder (CR1, CR2, CR3) and a demodulator (DMod1, DMod2, DMod3), each of said N third cascades being connected to a respective upstream side output of said N upstream side outputs.

7. The base station (BS) according to any of the preceding claims, wherein it further comprises an upstream microwave transceiver suitable for connecting said base station (BS) to a further adjacent upstream base station or to a traffic collection center of said mobile telecommunication network, said upstream microwave transceiver being located at said central unit (Cu).

8. The base station (BS) according to any of the preceding claims, wherein it further comprises a downstream microwave transceiver suitable for connecting said base station (BS) to a still further adjacent downstream base station, said downstream microwave transceiver being located at said central unit (Cu).

9. The base station (BS', BS", BS"') according to any of the preceding claims, wherein it comprises a further remote unit (Ru2) including at least one further radio transceiver (RT21, RT22, RT23) for exchanging traffic in form of at least one further radio signal with a further mobile terminal located within at least a further portion (s21, s22, s23) of said cell (C).

10. The base station (BS', BS") according to claim 9, wherein said further remote unit (Ru2) is configured to establish a further wireless connection with said central unit (Cu).

11. The base station (BS") according to claim 9 or 10, wherein said further remote unit (Ru2) is configured to establish a still further wireless connection with said remote unit (Ru1).

12. A method of processing traffic at a base station (BS) of a mobile communication network, said method comprising:
- at a remote unit (Ru) of said base station (BS), receiving an upstream radio signal (rs1, rs2, rs3) by means of a radio transceiver (RT1, RT2, RT3) from a mobile terminal located within at least a portion (s1, s2, s3) of a cell (C);
- at said remote unit (Ru), processing said upstream radio signal (rs1, rs2, rs3) thus generating an upstream digital signal (ds1, ds2, ds3) corresponding to said upstream radio signal (rs1, rs2, rs3);
- transmitting said upstream digital signal (ds1, ds2, ds3) to a central unit (Cu) of said base station (BS) by means of a wireless connection between said remote unit (Ru) and said central unit (Cu);
- at said central unit (Cu), processing said upstream digital signal (ds1, ds2, ds3) thus generating an upstream base band signal (bbs1, bbs2, bbs3) corresponding to said upstream radio signal (rs1, rs2, rs3); and
- at said central unit (Cu), performing a base band processing of said upstream base band signal (bbs1, bbs2, bbs3) by means of a base band processing module (PM).

13. The method according to claim 12, wherein said step of transmitting comprises transmitting said upstream digital signal (ds1, ds2, ds3) by means of said wireless connection in form of a microwave signal having a carrier frequency higher than 60 GHz.
